# EUROPEAN PATENT APPLICATION

(11) **EP 2 602 400 A1**
(43) Date of publication of application: **12.06.2013**
(21) Application number: 13155175.6
(22) Date of filing: 22.06.2010
(51) Int. Cl.: E04D 1/30, F24J 2/04, H01L 31/048

(54) **Building cover element with an integrated energy production device**

(30) Priority: 05.03.2010 IT RM20100032 U
(62) Divisional of application: 10747072.6
(71) Applicant: Istituto Ricerche Per Lo Sviluppo Economico E Sociale S.R.L., 00187 Roma (IT)
(72) Inventor: Borgomeo, Francesco, 00142 Rome (IT); Sanzi, Gianluca, 00193 Rome (IT)
(74) Representative: Romano, Giuseppe

(57) **Abstract**

The present invention refers to a building cover element with an integrated energy production device; in particular, it refers to a tile for covering building roofs which comprises a photovoltaic panel for the transforming of solar energy into electrical energy.

## Description

The present invention refers to a building cover element with an integrated energy production device; in particular, it refers to a tile for covering building roofs which comprises a photovoltaic panel for the transforming of solar energy into electrical energy.

Photovoltaic panels nowadays constitute a viable alternative to traditional energy sources and have a degree of technological maturity sufficient to justify their wide use. Besides allowing generation of electrical energy from the solar one, therefore at no cost save from the amortization of plant installation costs, photovoltaic panels prove particularly useful in contexts in which a reaching by the traditional power line would be uneconomical. Over the last years, wide attention has been addressed to photovoltaic solutions minimizing the environmental or aesthetical impact due to the presence of panels. In fact, installation of photovoltaic panels may be necessary in contexts that have architectural constrains inside urban areas, or landscape or naturalistic constraints. In these cases, the need to integrate the photovoltaic panels into other architectural elements is acutely felt. Therefore, the so-called "photovoltaic tiles" have been developed, which integrate photovoltaic panels of suitable shape positioned on tiles capable of accommodating them. This association between traditional building cover elements and photovoltaic panels gives added value to the building roof: if, on the one hand, it solves the problem of the top cover of buildings with elements very similar to traditional tiles, on the other hand it allows a considerable advantage on the level of the energy efficiency of the building itself.

Devices for the roof covering of buildings are known which integrate photovoltaic panels keeping them in their operating position (of exposure to sunlight according to what is envisaged at the design stage) under any atmospheric condition. Some design solutions proposed in the past envisage the inserting of the photovoltaic panel below a see-through portion of the tile, so as to hold the panel itself in the operating position and allow its replacement when necessary. Other known solutions are based on the presence of holding members present in the tile itself, to which the panel is connected and by which the panel itself is constrained to remain in the operating position. Known solutions for securing the photovoltaic panel to the tile have in common the fact that each panel is fixed by suitable holding members belonging to the tile itself. Therefore, substantial modifications to the tile architecture have to be provided in order to envisage the presence of the holding members on the tile itself. Moreover, the solutions proposed to date provide panel integration on tiles made of traditional materials, typically of brick materials, which do not offer particularly efficient features of disposal of the heat produced by the electrical devices connected to the photovoltaic panel. Another feature widely adopted in known devices is to be sought in the fact that some parts, like e.g. the bent tile, are raised with respect to the substantially plane portion into which the photovoltaic panel is accommodated. Therefore, under some illumination conditions, raised portions of the tile may create shadow cones on the panel, thereby limiting its efficiency.

As an example, EP0547285 discloses a photovoltaic tile made of ceramic material, suitable for the making of a building roof cover.

Therefore, the technical problem solved by the present invention is that of providing a building cover element with an integrated energy production device allowing to overcome the drawbacks mentioned above with reference to the known art.

Such a problem is solved by a cover element according to claim 1.

Preferred features of the present invention are set forth in the dependent claims thereof.

The present invention provides some relevant advantages. The main advantage lies in the fact that the subject-matter of the present invention allows a holding of the photovoltaic panel through holding members present on contiguous tiles. In other terms, the configuration of each tile is planned to hold the photovoltaic panel present in tiles located contiguously to that in which there is the panel itself. Another advantage consists in the making of the tile with a ceramic material having improved heat disposal properties (e.g., gres) allowing to more easily eliminate heat produced by electrical devices. In addition, the subject-matter of the present invention may be provided with a double photovoltaic panel. The presence of a double panel on each tile guarantees illumination of at least part of one of the two panels for any direction of provenance of the solar rays. Each panel is independently connected to the electric network, allowing power supply in the morning as well as the afternoon.

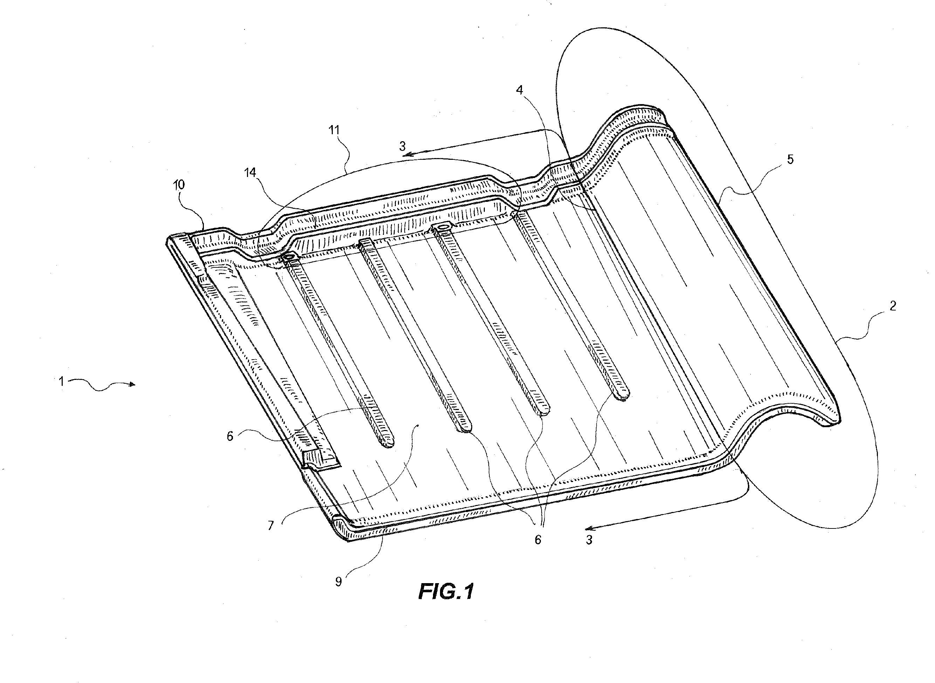

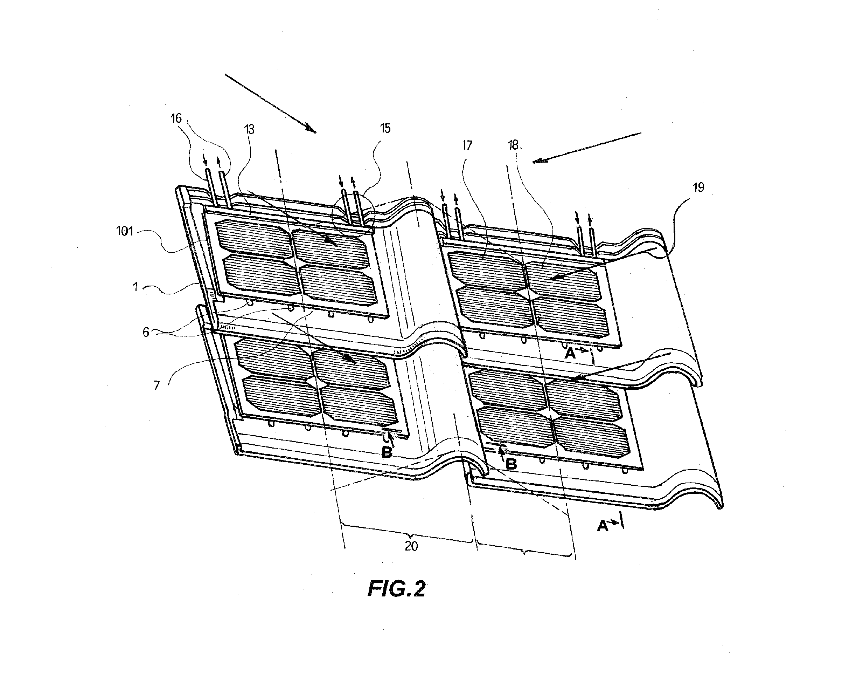

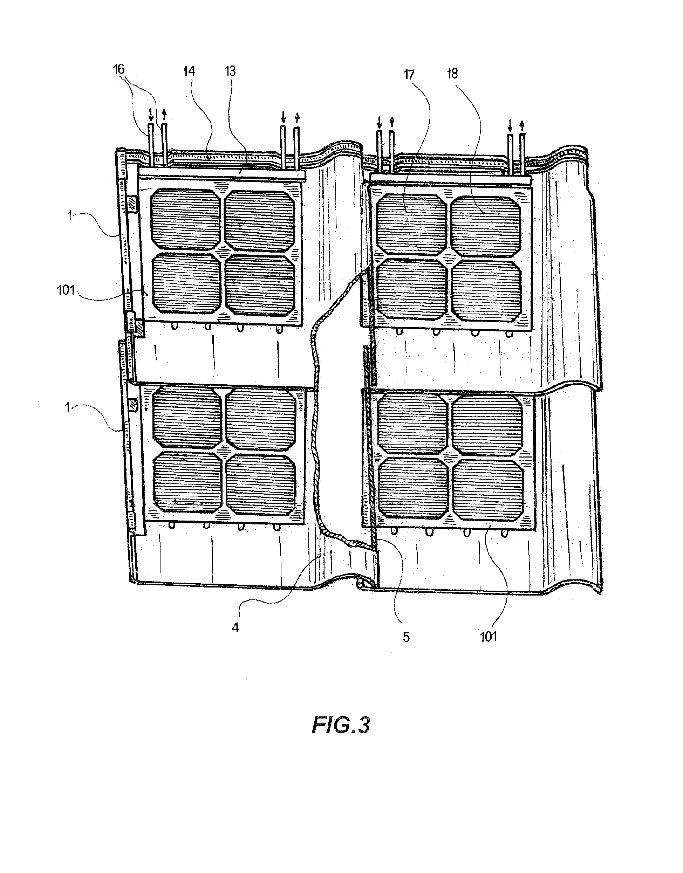

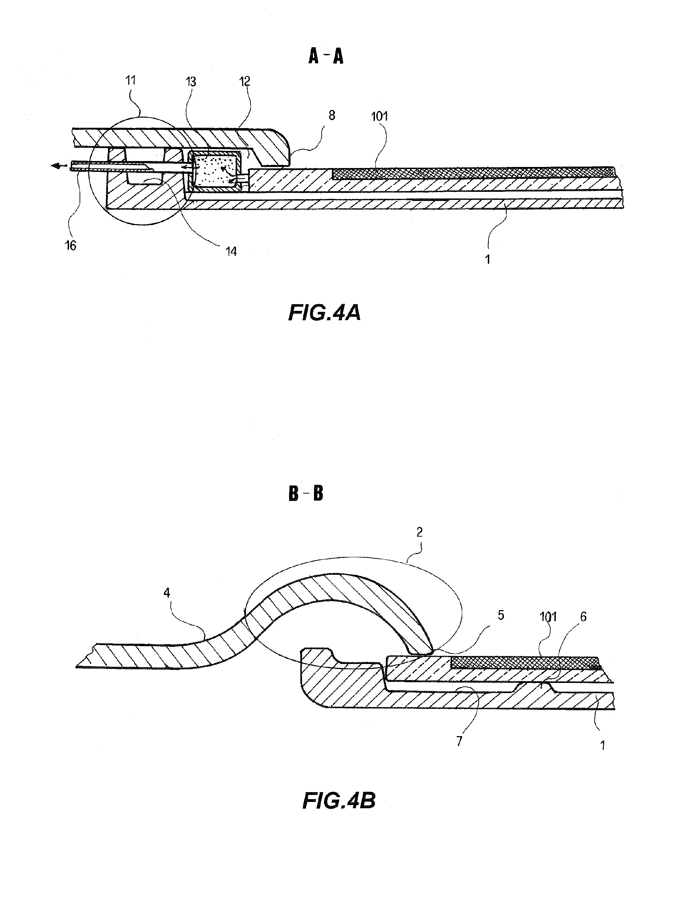

Other advantages, features and operation steps of the present invention will be made evident in the following detailed description of some embodiments thereof, given by way of example and not for limitative purposes. Reference will be made to the figures of the annexed drawings, wherein:
■ Figure 1 shows a front perspective view of an embodiment of a tile of a cover element according to the present invention;
■ Figure 2 shows a front perspective view of four cover elements assembled according to the present invention;
■ Figure 3 shows a section plane according to a top plan view of four cover elements assembled according to the present invention;
■ Figure 4A is a section view, partially along section A-A, of the cover element of Figure 2;
■ Figure 4B is a section view, partially along section B-B, of the cover element of Figure 2;

Referring initially to Figure 1, a tile of a cover element 1 according to a preferred embodiment of the present invention is generally indicated by 1. The tile 1 is made of a glazable ceramic material, in particular gres. Therefore, the heat conductivity properties of said material will be appreciated; said properties allow a disposal of the heat produced by the electrical devices, described hereinafter, present near the tile 1 itself.

The tile 1 may substantially be construed as composed of two main portions: a bent tile-shaped portion 2 and a substantially plane portion 3. These two portions are joined by an edge 4, substantially parallel to a direction parallel to a roof slope. The bent tile-shaped portion 2 is substantially a part shaped as a frustum-of-cone portion, characterized by two end generatrices 4, 5 substantially skew to each other. In particular, the end generatrix 4 coincides with the aforementioned edge 4 which joins the bent tile-shaped portion 2 and the substantially plane portion 3. In the substantially plane portion 3 a plurality of spacers 6, 7 is present whose function will be described hereinafter. Such spacers 6, 7 comprise dorsal lines 6 which are raised with respect to channels 7.

Moreover, Figure 1 shows longitudinal holding members 8, 9, 10 apt, as will be better described hereinafter, to enable a connection between the tile 1 and an alike tile positioned contiguously thereto. In particular, in the preferred embodiment of the invention, the mentioned longitudinal holding members 8, 9, 10 comprise a first edge 9 of the substantially plane portion 3. Oppositely to the first edge 9 a second edge 10 is present, along which a coupling region 11 is made. Along the coupling region 11 a groove 14 is present, which is apt to allow water downflow.

Figure 2 shows a view of four tiles 1 with four respective photovoltaic panels 101 arranged in the respective operating positions thereof. The system for holding the photovoltaic panels 101 on the respective tiles 1 will be better appreciated by analyzing Figure 2. In fact, it may be observed how a connection box 13 connected to a photovoltaic panel 101 is arranged in a parallel manner to the groove 14. Moreover, sideways to the coupling region 11 a plurality of passage members 15 are present, suitable for passage of electrical connection cables 16 of the photovoltaic panel 101. In addition, it is understood that the plurality of spacers 6, 7 serves to allow a ventilation of the photovoltaic panel 101. In fact, for air it is possible to provide a passage, for cooling purposes, between a face of the tile 1 and the photovoltaic panel 101. Figure 2 also shows how each photovoltaic panel 101 is partitioned into two distinct electrical circuits 17 and 18, independent from each other and connected in parallel, which are arranged so that an at least partial exposure of the photovoltaic panel 101 is had for any direction of provenance 19 of the incident solar rays. Thus, also when the incident solar rays 19 do not impinge on both of the two distinct electrical circuits 17, 18, at least one of the two will be at least partially external to a shadow cone 20 created by the bent tile-shaped portion 2, guaranteeing anyhow power-supplying to the electric network connected to the photovoltaic panel 101.

As will be more evident from a reading of what is disclosed hereinafter, the tile 1 moreover has a plurality of holding members apt to cooperate with analogous members of other alike and contiguous tiles in order to hold the respective photovoltaic panels 101 in the operating position when the tile 1 is inserted into the roof cover. This plurality of holding members comprises the aforementioned longitudinal holding members 8, 9, 10 and transversal holding members 5, 6.

Figure 3 shows the transversal holding members 5, 6 apt to hold the photovoltaic panel 101 in a parallel manner to the roof surface and in a direction perpendicular to the slope of the roof itself. These transversal holding members comprise at least one edge 5 of the bent tile-shaped portion 2 which is apt to overlap to a portion of the photovoltaic panel 101 of a contiguous tile, by exploiting the fact that the end generatrices 4, 5 of the bent tile-shaped portion 2 are skew to each other. In other words, the bent tile-shaped portion 2 is substantially a semicylinder having a base of diameter greater than the other one. Thus, part of the bent tile-shaped portion 2 of a tile overlaps at least partially to the photovoltaic panel 101 of another tile positioned contiguously to the first one.

Figure 4B shows a section B-B indicated in Figure 2. In Figure 4B it may be appreciated how the bent tile-shaped portion 2 of a tile 1 has an edge 5 overlapping to the photovoltaic panel 101 placed in the operating position on an adjacent tile. Therefore, the photovoltaic panel 101 is fixed, on the one side, by the overhanging edge 5 of the contiguous tile and, on the other side, by the dorsal line 6 of the tile 1.

Figure 4A shows a section A-A indicated in Figure 2. In Figure 4A, the longitudinal holding members make the coupling system between two contiguous tiles along the direction parallel to the roof slope. It is appreciated how a coupling tooth 8 arranged along the first edge 9 of a tile fits in with the coupling region 11 of the contiguous tile. Thus, a compartment 12 is created at the gap between the coupling tooth 8 of a tile and the coupling region 11 of the adjacent tile which is apt to accommodate and hold a connection box 13. In this manner, the connection box 13 remains fixed in between the coupling tooth 8 of a tile and the coupling region 11 of the adjacent tile, actually preventing the photovoltaic panel 101 from moving in a direction parallel to the roof slope. Moreover, it will be appreciated that the compartment 12 also performs a function of protecting the connection box 13 from atmospheric agents.

The present invention has been hereto described with reference to preferred embodiments thereof. It is understood that other embodiments might exist, all falling within the concept of the same invention, as defined by the protective scope of the claims hereinafter.

## Claims

1. A cover element for the making of a building roof covering, the roof being sloped, comprising:
- a tile (1) made of glazable ceramic material, and
- a photovoltaic panel (101) apt to transform incident solar energy into electrical energy,
said tail (1) comprising holding members (5, 8),
the arrangement being such that, when said cover element is coupled to other cover elements into the roof covering, the photovoltaic panel (101) of each cover element is hold by holding members (5, 8) belonging to alike and contiguous cover elements.

2. Cover element according to claim 1, wherein said ceramic material is gres.

3. Cover element according to claim 1 o 2, wherein said holding members (5, 8) comprise transversal holding member (5) and longitudinal holding member (8), said transversal holding member (5) being apt to cooperate with the tile of a first contiguous cover element for holding the photovoltaic panel of the first contiguous cover element in a direction perpendicular to the slope of said roof, and said longitudinal holding member (8) being apt to cooperate with the tile of a second contiguous cover element for holding the photovoltaic panel of the second contiguous cover element in a direction parallel to the slope of said roof, when said cover element is inserted into the roof covering.

4. Cover element according to anyone of the claims 1 to 3, further comprising a connection box (13) connected to the photovoltaic panel (101) containing the respective electrical connections.

5. Cover element according to claim 4, wherein said tile (1) further comprises a coupling region (11) made along a second edge (10) of said tile (1) and said longitudinal holding member (8) comprises a coupling tooth (8) made along a first edge (9) of said tile (1), said coupling region (11) being apt to cooperate with the coupling tooth (8) of another alike and contiguous cover element, creating a compartment (12) apt to accommodate and hold said connection box (13) in a manner such as to keep said photovoltaic panel (101) in said operating position.

6. The cover element (1), according to claim 5, wherein said coupling region (11) comprises a groove (14) apt to allow water downflow.

7. The cover element (1) according to claim 5 or 6, wherein said compartment (12) is apt to contain said connection box (13), protecting the same from atmospheric agents.

8. The cover element (1), according to any one of claims 5 to 7, wherein said tile (1) has a groove (14) along said coupling region (11) and a plurality of passage members (15) sideway to the coupling region (11) for the passage of electrical connection cables (16) of the photovoltaic panel (101).

9. The cover element (1), according to anyone of the preceding claims, wherein said tile (1) comprises a bent tile-shaped portion (2) and a substantially plane portion (3), said portions being connected therebetween by means of an edge (4).

10. The cover element (1), according to claim 9, wherein said transversal holding member (5) comprises at least one edge of said bent tile-shaped portion (2), said edge being such as to overlap to a portion of a photovoltaic panel (101) of a contiguous tile.

11. The cover element (1), according to claim 9 or 10, wherein said bent tile-shaped portion (2) has two end generatrices (4, 5) substantially skew to each other.

12. The cover element (1), according to any one of the preceding claims, wherein said photovoltaic panel (101) comprises at least two electrical circuits (17, 18) distinct and independent from each other, their arrangement being such as to allow an at least partial exposure of said photovoltaic panel (101) for any direction of provenance (19) of incident solar rays, said at least two electrical circuits (17, 18) being connected in parallel.

13. The cover element (1), according to any one of the preceding claims, wherein said tile (1) comprises a plurality of raised dorsal lines (6), alternating with channels (7), apt to allow air transit between a face of said tile (1) and said photovoltaic panel (101) so as to prevent an overheating thereof.
